# EUROPEAN PATENT APPLICATION

(11) **EP 4 733 365 A1**
(43) Date of publication of application: **29.04.2026**
(21) Application number: 24786339.2
(22) Date of filing: 28.03.2024
(51) Int. Cl.: C09J 9/00, C09J 11/06, C09J 101/00, C09J 103/00, C09J 129/04, C09J 133/00

(54) **TACKINESS-REDUCING AGENT COMPOSITION**

(30) Priority: 23.06.2023 JP 2023102910
(71) Applicant: CCI Corporation, Seki-shi, Gifu 501-3923 (JP); CCI Holdings Inc., Seki-shi, Gifu 501-3923 (JP)
(72) Inventor: GOTO, Tomohiro, Seki-shi, Gifu 501-3923 (JP); HOTTA, Kosuke, Seki-shi, Gifu 501-3923 (JP)
(74) Representative: Becker, Eberhard
(86) International application number: PCT/JP2024/012659
(87) International publication number: WO 2024/262120

(57) **Abstract**

An object is to obtain an adhesion-reducing agent composition which allows positioning and re-attachment of an adhesive film over a sufficient period of time without worrying about drying of a coating of the applied adhesion-reducing agent composition when attaching the adhesive film, and which does not cause wrinkles, air bubbles, or the like. As a means for solving the problem, there is provided an adhesion-reducing agent composition for adhesive film work, which contains 0.10% by weight or more of one or more selected from aqueous (meth)acrylic resins, polysaccharides, and polyvinyl alcohol resins.

## Description

### Technical Field

The present invention relates to an adhesion-reducing agent composition.

### Related Art

Attachment of wrapping films or protection films has been attracting attention as a decorative method to replace painting or plating of an automobile (body). For example, by attaching a wrapping film printed with anime characters to the bonnet of an automobile, it is possible to add a decorative touch to the body. The method of attaching such a decorative film involves applying water or an alcohol aqueous solution to the body, pressing the decorative film against the body to determine the attachment position, and then closely adhering the decorative film to the body. Water or the alcohol aqueous solution is used to position the decorative film in place while sliding it over the surface of the body, without causing the adhesive agent on the decorative film to closely adhere to the body. However, as water or alcohol aqueous solution has high saturated vapor pressure and evaporates easily, if the film is not positioned immediately, the adhesive agent on the decorative film will adhere to the body before positioning, causing paste to slip (shift of adhesive agent) or air bubbles to remain.

Moreover, such a method as described in Patent Document 1 is known that involves wetting the bonding surface of a pressure-sensitive bonding film and/or the surface of an object to be bonded with an aqueous surfactant solution, aligning these two surfaces together, and making the aqueous surfactant solution therebetween flow out using a rubber spatula or the like for bonding.

### Prior-Art Document

### Patent Document

Patent Document 1: Japanese Patent Laid-open No. S51-69537

### SUMMARY OF INVETION

### Problems to be solved by the invention

As mentioned above, it is known to use a surfactant solution to bond an adhesive film to a target object.

When such a method is adopted, the positioning of the adhesive portion of the adhesive film must be completed before the surfactant solution applied to the adhesive surface of the adhesive film or to the surface of the target object dries. By ensuring that a sufficient amount of not only surfactant but also solvent is present between the adhesive agent layer of the adhesive film and the surface of the target object, the entire adhesive film including the adhesive agent layer may first be slid over the surface of the target object or re-positioned after being temporarily peeled off from the temporarily bonded state. Otherwise, there would be no point in using the surfactant solution.

Moreover, when the surface of the target object is a vertical surface or inclined surface, such as the side surface or glass surface of an automobile body, or the wall or window of a building, the surfactant solution temporarily applied flows away immediately after application, and at least a portion of the remaining thin liquid film dries in a short period of time. Especially, it dries out faster under low humidity and high temperature conditions. For this reason, in conventional methods, it is necessary to quickly align the adhesive film on the surface of the target object and position it before the applied surfactant solution dries. Because the work must be completed in such a short time, skill is required to attach the adhesive film neatly.

Furthermore, the larger the area of the adhesive film, the more difficult it becomes to complete attachment of the adhesive film to the target object before the applied surfactant solution dries.

Furthermore, the viscosity changes significantly during long-term storage, particularly when the temperature changes, making it difficult for stable use.

The present invention solves these problems, and when attaching an adhesive film, allows positioning or re-attachment of the adhesive film over a sufficient period of time. And, the object of the present invention is to obtain an adhesion-reducing agent composition that does not generate wrinkles, air bubbles, etc. and has excellent storage stability.

### Means for solving the Problems

In order to solve the above problems, the present invention provides the following adhesion-reducing agent composition.
1. An adhesion-reducing agent composition for adhesive film work, including 0.10% by weight or more of one or more selected from the group consisting of aqueous (meth)acrylic resins, polysaccharides, and polyvinyl alcohol resins.
2. The adhesion-reducing agent composition for adhesive film work according to 1, having a viscosity at 20°C of 1,000 to 5,000 mPa·s.
3. The adhesion-reducing agent composition for adhesive film work according to 1 or 2, in which the base material contains one or more selected from water, alcohols, glycols and glycol ethers.

### Effects of invention

When the adhesion-reducing agent composition for adhesive film work according to the present invention is used at the time of attaching an adhesive film for decorative purposes or the like, peel strength of the attached adhesive film relative to the target object becomes low, which provides the effect of allowing smooth positioning and re-attachment during application. Furthermore, the same effect is achieved whether or not the adhesion-reducing agent composition dries on the surface of the adhesive agent layer of the target object or adhesive film. Hence, the adhesive film can be attached over a sufficient period of time even to a vertical surface on which liquid is unlikely to remain and therefore tends to dry out easily. Moreover, re-attachment or positioning when attaching is also possible.

It has the effect of allowing the attachment of a large adhesive film or the attachment of an adhesive film to a target object having a large area, over a sufficient period of time. Moreover, since the peel strength of the adhesive film attached to the target object becomes low, it has the effect of being able to adjust the ease of peeling when peeling off the temporarily attached adhesive film in usages where the adhesive films are replaced periodically (such as automobile advertising wrapping, building interiors, etc.).

Furthermore, the adhesion-reducing agent composition has excellent storage stability over a wide temperature range from low to high.

### DESCRIPTION OF THE EMBODIMENTS

The adhesion-reducing agent composition for adhesive film work of the present invention will be specifically described below.

The adhesion-reducing agent composition for adhesive film work contains one or more selected from aqueous (meth)acrylic resins, polysaccharides, and polyvinyl alcohol resins, and may further contain various additives as required.

The viscosity at 20° C of the adhesion-reducing agent composition for adhesive film work is preferably 1,000 mPa·s or more, more preferably 1,500 mPa·s or more, and even more preferably 2,000 mPa·s or more. Moreover, it is preferably 5,000 mPa·s or less, more preferably 4,000 mPa·s or less, and even more preferably 3,000 mPa·s or less. If the viscosity is too low, it will flow down before the adhesive film is placed, making it difficult to position the adhesive film. If the viscosity is too high, it will be difficult to scrape out the adhesion-reducing agent composition when adhering the adhesive film after positioning the adhesive film.

Furthermore, it is preferable that the viscosity after storage for up to four weeks at a constant temperature of -20°C to 90°C is within the above range.

### [One or more selected from aqueous (meth)acrylic resins, polysaccharides, and polyvinyl alcohol resins]

The adhesion-reducing agent composition of the embodiment contains one or more selected from aqueous (meth)acrylic resins, polyvinyl alcohol resins, and polysaccharides. In this specification, one or more selected from aqueous (meth)acrylic resins, polysaccharides, and polyvinyl alcohol resins may be simply referred to as a thickener component.

### (Aqueous (meth)acrylic resin)

The aqueous (meth)acrylic resin includes a copolymer containing at least (meth)acrylic acid among (meth)acrylic acid and (meth)acrylic acid esters and having (meth)acrylic acid and/or (meth)acrylic acid esters as the main component.

The term "main component" means that the copolymer contains 50 mass % or more of units derived from (meth)acrylic acid and/or (meth)acrylic acid esters.

Examples of the (meth)acrylic acid include, but not limited to, for example, acrylic acid, methacrylic acid, and the like. Moreover, examples of (meth)acrylic acid esters include, but are not limited to, methyl methacrylate, ethyl (meth)acrylate, isopropyl (meth)acrylate, n-propyl (meth)acrylate, n-butyl (meth)acrylate, isobutyl (meth)acrylate, hexyl (meth)acrylate, cyclohexyl (meth)acrylate, 2-hydroxyethyl (meth)acrylate, 2-hydroxypropyl (meth)acrylate, polyethylene glycol mono(meth)acrylate, and polypropylene glycol mono(meth)acrylate. Furthermore, other monomers such as crotonic acid, maleic acid, fumaric acid, itaconic acid, citraconic acid, maleic anhydride, acrylonitrile, (meth)acrylic acid amide, N-methylolacrylamide, and glycidyl methacrylate may also be copolymerized.

The aqueous (meth)acrylic resin is usually neutralized with a basic substance and used in the form of an aqueous solution. Examples of basic substances include, but are not limited to, alkanolamines such as triethanolamine and monoethanolamine, inorganic bases such as ammonia, sodium hydroxide and potassium hydroxide, and basic amino acids such as arginine. The amount of the basic substance to be added only needs to be an amount sufficient to neutralize the above-mentioned copolymer, and it only needs to be appropriately formulated according to the types and amounts of these components used.

The aqueous (meth)acrylic resin may be in the form of a powder, an aqueous solution, or an emulsion.

As the powdered aqueous (meth)acrylic resin, commercially available products may also be used. Examples of such commercially available products include, but are not limited to, "Aron (trademark) A-20P-X", "Aronvis (trademark) MX", "Jurymer (trademark) AC-10LHP", "Jurymer AC-10SHP", "Rheogic (trademark) 260H", "Rheogic 262L", "Rheogic 845H", "Junron (trademark) PW-120", "Junron PW-121", and "Junron PW-160", all manufactured by Toagosei Co., Ltd.

As the aqueous (meth)acrylic resin for the aqueous solution, commercially available products may also be used. Examples of such commercially available products include, but are not limited to, "Aron A-20L", "Aron A-7100", "Aron A-10H", "Aron A-30", "Aron A-7255", "Aron A-7185", and "Aron A-7195" manufactured by Toagosei Co., Ltd.

As the aqueous (meth)acrylic resin for the emulsion, commercially available products may also be used. Examples of such commercially available products include, but are not limited to, "Aron A-7075", "Aron A-7055", "Aron B-300K", and "Aron B-500" manufactured by Toagosei Co., Ltd., and "SN Thickener (trademark) 630", "SN Thickener 634", "SN Thickener 636", and "SN Thickener 640" manufactured by San Nopco Limited.

These aqueous (meth)acrylic resins may be used alone or in combination of two or more.

The weight average molecular weight of the aqueous (meth)acrylic resin is not particularly limited, but is preferably from 100,000 to 6,000,000, and more preferably from 500,000 to 5,000,000. By ensuring that the weight average molecular weight is 100,000 or more, dripping of the adhesion-reducing agent composition may be further suppressed. By ensuring that the weight average molecular weight is 6,000,000 or less, the transparency of the coating film obtained from the adhesion-reducing agent composition is further improved. The weight average molecular weight may be measured by Gel Permeation Chromatography (GPC).

### (Polysaccharides)

Examples of polysaccharides include cellulose compounds such as methylcellulose, nitrocellulose, ethylcellulose, carboxymethylcellulose, hydroxypropylmethylcellulose, sodium cellulose sulfate, hydroxypropylcellulose, sodium carboxymethylcellulose, and hydroxyethylcellulose; gums such as xanthan gum, gellan gum, gum arabic, tragacanth gum, galactan, carob gum, guar gum, locust bean gum, tamarind gum, karaya gum, and carrageenan; agar, starch, and chitosan.

### (Polyvinyl alcohol resin)

The polyvinyl alcohol resin is preferably one obtained by saponifying polyvinyl acetate to a desired degree of saponification.

The content of one or more selected from aqueous (meth)acrylic resins, polysaccharides and polyvinyl alcohol resins in the adhesion-reducing agent composition of the present invention is 0.10% by weight or more. It is preferably 0.13% by weight or more, more preferably 0.15% by weight or more, even more preferably 0.20% by weight or more, and most preferably 0.27% by weight or more. Moreover, it is preferably 1.00% by weight or less, more preferably 0.80% by weight or less, further preferably 0.60% by weight or less, and most preferably 0.50% by weight or less. Since the thickener is mainly present at the interface between the adhesive agent layer and the target object after the adhesive film is attached, by setting the content of the thickener in the adhesion-reducing agent composition within the above range, the peel strength of the attached adhesive film does not exceed 0.30 kgf regardless of the adhesive agent. As a result, it has better workability when attaching the adhesive film, and it also has improved peelability when replacing the adhesive film.

### [Base material]

The base material that may be used in the adhesion-reducing agent composition for adhesive film work of the present invention is a solvent that dissolves the aqueous (meth)acrylic resin and various additives, such as a surfactant, that are optionally contained. Moreover, one or more selected from ion-exchanged water, pure water, water, alcohols such as ethanol, glycols, glycerin, and glycol ethers is/are contained. The concentration of water in the entire base material is preferably 70.0% by weight or more, more preferably 85.0% by weight or more, even more preferably 90.0% by weight or more, and most preferably 95.0% by weight or more.

When alcohols are contained, the concentration of the alcohols in the entire base material is preferably 5.0% by weight or more, more preferably 8.0% by weight or more, and even more preferably 10.0% by weight or more. Moreover, it is preferably 18.0% by weight or less, more preferably 16.0% by weight or less, and even more preferably 14.0% by weight or less.

When glycols, glycerin and glycol ethers are contained, the concentration of the glycols, glycerin and glycol ethers in the entire base material is preferably 0.1% by weight or more, more preferably 0.2% by weight or more, and even more preferably 0.5% by weight or more. Moreover, it is preferably 3.0% by weight or less, more preferably 2.0% by weight or less, and even more preferably 1.5% by weight or less.

Among these, a mixture of water and ethanol is preferred from the standpoint of coatability.

The base material is selected taking into consideration the coatability of the adhesion-reducing agent composition for adhesive film work, and also the solubility of the surfactant and additives added as required.

### (Alcohols contained in the base material)

Examples of the alcohols include, for example, one or more selected from methanol, ethanol, propanol, butanol, pentanol, hexanol, heptanol, and octanol.

### (Glycols contained in the base material)

Examples of the glycols include one or more selected from ethylene glycol, propylene glycol, 1,3-propanediol, 1,3-butylene glycol, hexylene glycol, diethylene glycol, triethylene glycol, and glycerin.

### (Glycol ethers contained in the base material)

Examples of the glycol ethers include one or more selected from ethylene glycol monomethyl ether, diethylene glycol monomethyl ether, triethylene glycol monomethyl ether, tetraethylene glycol monomethyl ether, ethylene glycol monoethyl ether, diethylene glycol monoethyl ether, triethylene glycol monoethyl ether, tetraethylene glycol monoethyl ether, ethylene glycol monobutyl ether, diethylene glycol monobutyl ether, triethylene glycol monobutyl ether, and tetraethylene glycol monobutyl ether.

### [Additives]

The adhesion-reducing agent composition for adhesive film work of the present invention may contain any additives such as surfactants, fragrances, preservatives, and dyes. These additives are preferably soluble in the base material.

Moreover, components that react with substances contained in the adhesive agent layer of the adhesive film, components that react between additives, and components that are reactive with substances in the surface layer of the target object may or may not be contained.

Furthermore, any of the known fragrances, preservatives, and dyes may be used.

### [Surfactants]

The surfactants that may be used in the present invention may be any of known surfactants, and one or more of them may be selected for use.

One or more may be optionally selected from the following anionic surfactants, cationic surfactants, nonionic surfactants, and amphoteric surfactants.

When a surfactant is contained in the adhesion-reducing agent composition for adhesive film work of the present invention, the content of the surfactant is 0.05% by weight or more. It is preferably 0.10% by weight or more, more preferably 0.20% by weight or more, even more preferably 0.25% by weight or more, and most preferably 0.50% by weight or more. By making it 0.05% by weight or more, the adhesive film may be attached with better workability.

### (Anionic surfactants)

As the anionic surfactants, saturated fatty acids having 8 to 24 carbon atoms, unsaturated fatty acids having 8 to 24 carbon atoms, unsaturated fatty acids having 8 to 24 carbon atoms modified with acrylic acid, maleic anhydride, fumaric acid, dienes, or dienophile, resin acids, resin acids modified with acrylic acid, maleic anhydride, fumaric acid, dienes, or dienophiles, natural resin polymers, tannins, lignin polymers, polyacrylic acid, polyacrylic acid derivatives, alkyl sulfonates, alkylbenzenesulfonic acids, alkyl sulfates, alkylphosphonic acids, alkyl phosphates, phenolic resins, and mixtures thereof may be used.

Among these, polyoxyethylene alkyl ether sulfates such as sodium polyoxyethylene lauryl ether sulfate, polyoxyethylene triethanolamine lauryl sulfate, and sodium polyoxyethylene lauryl sulfate, polyoxyethylene alkylphenyl ether sulfate, polyoxyethylene monostyrylphenyl ether sulfate, polyoxyethylene distyrylphenyl ether sulfate, polyoxyethylene alkyl ether phosphate, polyoxyethylene alkylphenyl ether phosphate, polyoxyethylene monostyrylphenyl ether phosphate, polyoxyethylene distyrylphenyl ether phosphate, polyoxyethylene alkyl ether carboxylate, polyoxyethylene alkylphenyl ether carboxylate, polyoxyethylene monostyrylphenyl ether carboxylate, polyoxyethylene distyrylphenyl ether carboxylate, naphthalene sulfonate formalin condensate, melamine sulfonate formalin condensate, dialkyl sulfosuccinate salt, alkyl sulfosuccinate di-salt, polyoxyethylene alkyl sulfosuccinate di-salt, alkyl sulfoacetate, α-olefin sulfonate, alkylbenzene sulfonate, alkylnaphthalene sulfonate, alkyl sulfonate, N-acylamino acid salt, acylated peptide, and soap, etc. may be mentioned.

Examples of the salts of these anionic surfactants include one or more selected from alkali metal salts such as sodium salts and potassium salts, ammonium salts, and organic ammonium salts.

### (Cationic surfactants)

As the cationic surfactants, the following may be used:
(i) an aliphatic imide amine obtained by modifying a fatty acid having 12 to 24 carbon atoms with at least one of acrylic acid, maleic anhydride, fumaric acid, dienes, and dienophiles, and reacting the resulting modified product with a polyalkylene polyamine;
(ii) an aliphatic amidoamine obtained by modifying a fatty acid having 12 to 24 carbon atoms with at least one of acrylic acid, maleic anhydride, fumaric acid, dienes, and dienophiles, and reacting the resulting modified product with at least one of a polyalkylene polyamine, saturated alkyl monoamines having 12 to 24 carbon atoms, unsaturated alkyl monoamines having 12 to 24 carbon atoms, saturated alkyl polypropylene polyamines having 12 to 24 carbon atoms, and unsaturated alkyl polypropylene polyamines having 12 to 24 carbon atoms, polyoxyethylene derivatives obtained by modifying saturated alkyl monoamines having 12 to 24 carbon atoms with at least one of ethylene oxide or propylene oxide, polyoxyethylene derivatives obtained by modifying unsaturated alkyl monoamines having 12 to 24 carbon atoms with at least one of ethylene oxide or propylene oxide, polyoxyethylene derivatives obtained by modifying saturated alkyl polypropylene polyamines having 12 to 24 carbon atoms with at least one of ethylene oxide or propylene oxide, and polyoxyethylene derivatives obtained by modifying unsaturated alkyl polypropylene polyamines having 12 to 24 carbon atoms with at least one of ethylene oxide or propylene oxide;
saturated alkyl allyl monoamines having 12 to 24 carbon atoms, unsaturated alkyl allyl monoamines having 12 to 24 carbon atoms, saturated alkyl allyl polypropylene polyamines having 12 to 24 carbon atoms, unsaturated alkyl allyl polypropylene polyamines having 12 to 24 carbon atoms, saturated quaternary amines having 12 to 24 carbon atoms, unsaturated quaternary amines having 12 to 24 carbon atoms, amine derivatives of tannin, amine derivatives of phenolic resins, amine derivatives of lignin, amine-modified polyacrylates, and mixtures thereof.

### (Nonionic Surfactants)

As the nonionic surfactants, polyoxyethylene alkyl ethers, polyoxyethylene polyoxypropylene alkyl ethers, polyoxyalkylene dialkyl ethers, polyoxyethylene alkenyl ethers, polyoxyalkylene alkylphenyl ethers, reverse Pluronic block polymers, reverse Tetronic block polymers, sucrose fatty acid esters, sorbitan fatty acid esters, polyethylene glycol fatty acid esters, glycerin fatty acid esters, polyglycerin fatty acid esters, propylene glycol fatty acid esters, polypropylene glycol fatty acid esters, coconut fatty acid diethanolamide, lauric acid diethanolamide, lauric acid myristic acid diethanolamide, myristic acid diethanolamide, oleic acid diethanolamide, palm kernel fatty acid diethanolamide, alkyl glucosides, and amine oxides may be used.

### (Amphoteric surfactants)

As the amphoteric surfactants, a resulting product obtained by the following may be used: modifying a fatty acid having 12 to 24 carbon atoms with at least one of acrylic acid, maleic anhydride, fumaric acid, dienes, and dienophiles, and reacting the resulting modified product with at least one of polyethylene polyamines, lithium alkylamidopropyl halide methylcarboxylate betaine having 12 to 24 carbon atoms, sodium alkylamidopropyl halide methylcarboxylate betaine having 12 to 24 carbon atoms, alkyl amidopropyl halide methyl carboxylate potassium betaine having 12 to 24 carbon atoms, lithium alkylamidopropyl halide phosphate betaine having 12 to 24 carbon atoms, sodium alkylamidopropyl halide phosphate betaine having 12 to 24 carbon atoms, potassium alkylamidopropyl halide phosphate betaine having 12 to 24 carbon atoms, lithium alkylamidopropyl halide sulfate betaine having 12 to 24 carbon atoms, sodium alkylamidopropyl halide sulfate betaine having 12 to 24 carbon atoms, and potassium alkylamidopropyl halide sulfate betaine having 12 to 24 carbon atoms.

### [Adhesive film]

The adhesive film to which the adhesion-reducing agent composition for adhesive film work of the present invention is applied has a base film layer and an adhesive agent layer, and may be used without any particular limitation.

### (Base film layer)

As the base film layer, any material that may be used as a base material for an adhesive film, such as polyolefin, polyester, polyvinyl chloride, polyvinyl alcohol, polyamide, polystyrene, polyurethane, fluororesin, silicone resin, elastomer, etc., may be used, as well as any material that may be used as a base material for an adhesive film, such as paper, metal foil, nonwoven fabric, woven fabric, etc.

Although a material having such a property that the base film layer itself stretches when pulled may be used, a material that does not stretch is more preferable.

The thickness of such a base film layer is preferably 100 to 500 µm.

### (Adhesive agent layer)

For the adhesive agent layer, resins that may be used as known adhesive agent layers, such as elastomers, (meth)acrylic resins, polyesters, polyurethanes, and polyolefins, may be used. The resin itself may have adhesiveness, or the layer may be made of an adhesive agent that exhibits adhesiveness by containing a known tackifier.

The thickness of the adhesive agent layer may be approximately the same as the thickness of adhesive agent layer of an ordinary adhesive film.

### (Use and target object of adhesive film)

The use of the adhesive film in the present invention is related to the target object, but any use such as wrapping film or protection film may be used.

For example, the target objects include automobile bodies, automobile glass, automobile accessories, other vehicles, transportation equipment such as ships and aircraft, the interior and exterior of buildings, window glass, doors, various everyday items, and other uses, on which the adhesive film is attached while taking its design and surface protection into consideration.

The material of the target object may be metal, resin, printed surface, painted surface, glass, ceramic, wood, or the like. Materials that are dissolved, denatured, or swelled by the adhesion-reducing agent composition for adhesive film work are not preferred.

The surface may be flat or curved, but porous materials such as woven fabric, nonwoven fabric, and sponge-like substances are not preferred.

### (Attachment of adhesive film using the adhesion-reducing agent composition for adhesive film work of the present invention)

The method for attaching an adhesive film using the adhesion-reducing agent composition for adhesive film work of the present invention involves first uniformly spreading the adhesion-reducing agent composition for adhesive film work on the cleaned surface of a target object in a conventional manner. Thereafter, while the adhesion-reducing agent composition for adhesive film work is still wet, or preferably after it has been dried and a layer made of a aqueous (meth)acrylic resin is formed, the adhesive film is pressed against the target object using a spatula or the like, while bringing the adhesive agent layer side of the adhesive film into contact for positioning or re-attachment, and the applied adhesion-reducing agent composition for adhesive film work is extruded from between the target object and the adhesive film.

The bonding strength of the adhesive film to the target object after the attachment of the adhesive film may be determined arbitrarily depending on the use, but it is preferable to use the adhesion-reducing agent composition for adhesive film work in usages where the adhesive films are replaced.

The peel strength of the adhesive film attached after applying the adhesion-reducing agent composition for adhesive film work is lower than the peel strength of the adhesive film attached without applying the adhesion-reducing agent composition for adhesive film work.

The peel strength is preferably 0.30 kgf or less. It is further preferable that the peel strength is 0.15 kgf or less.

### (Examples)

The components of the composition of the adhesion-reducing agent composition for adhesive film work used in the Examples and Comparative examples, as well as the test results and effects, are shown in Table 1 below.

### (Adjustment of adhesion-reducing agent composition for adhesive film work)

The components were mixed so as to obtain the composition shown in Table 1 below, to adjust adhesion-reducing agent composition for adhesive film work in each Example and Comparative example.

### (Viscosity of the adhesion-reducing agent composition for adhesive film work)

The viscosity of the sample at 20° C was measured using a B-type viscometer (BII type viscometer BMII manufactured by Toki Sangyo Co., Ltd., low viscosity type range: M, No. 3 is used for rotor, upper measurement limit is 10,000 mPa·s).

### (Adhesive film workability)

The workability at the time of attaching the adhesive film was evaluated.

Five detailing technicians attached adhesive film (ULTIMATE PLUS manufactured by XPEL) (500 mm x 500 mm) to the body of the automobile. The adhesion-reducing agent composition for adhesive film work was applied to the body of the automobile, and then the above-mentioned adhesive film was immediately attached thereto.

Ease of work was rated with ⊚, ○, Δ, and ×.
⊚: Even after taking more than a sufficient amount of time, the adhesive film could be positioned or re-attached when being attached, and the attachment was neat and free of wrinkles and air bubbles.
○: It was possible to position or re-attach the adhesive film over a sufficient period of time when attaching, and the attachment was neat and free of wrinkles and air bubbles.
Δ: It was difficult to position or re-attach the adhesive film when attaching, and slight wrinkles and air bubbles were liable to occur as a result of attachment.
×: The adhesive film could only be attached once, and correction of positioning or the like was impossible. Wrinkles and air bubbles also appeared.

### (Adhesive film peel strength)

A vertically hung coating test piece (paint: TM Black 202, test piece size: 70 mm x 150 mm) was immersed in the adhesion-reducing agent composition for adhesive film work. This was kept in a vertically raised state for 30 seconds. Next, the coating test piece was placed horizontally with the coating surface facing upward, and a 50 mm x 50 mm section of an adhesive film (a 70 mm x 50 mm film of an ULTIMATE PLUS manufactured by XPEL with a 5 mm diameter hole opened in the center of the upper 20 mm x 50 mm section) was attached onto the coating surface.

After attaching and leaving it for a sufficient period of time, the hook of a push-pull gauge was hooked into a 5 mm diameter hole in the center of the upper 20 mm x 50 mm section that was not attached to the coating test piece. The coating test piece was fixed horizontally with the coating surface facing upward. In this fixed state, the push-pull gauge was pulled perpendicularly to the coating surface. The load required for peeling the adhesive film from the coating surface was measured.

**[Table 1]**

| | | Example 1 | Example 2 | Example 3 | Example 4 | Comparative example 1 | Comparative example 2 | Comparative example 3 | Comparative example 4 |
|---|---|---|---|---|---|---|---|---|---|
| Base | Water | 88.5 | 88.5 | 88.5 | 88.5 | 88.5 | 70 | 100 | No liquids used |
| | Ethanol | 11.2 | 11.2 | 11.2 | 11.2 | 11.2 | 30 | | |
| Aqueous (meth)acrylic resin | | 0.25 | 0.29 | 0.35 | 0.12 | 008 | | | |
| Viscosity (20°C) (mPa · s) | | 1,350 | 2,450 | 5,000 | 21.5 | 8.5 | 2.1 | 0.9 | |
| Film workability | | ○ | ⊚ | ○ | ○ | Δ | Δ | Δ | × |
| Film peel strength (Kef) | | 0.11 | 0.02 | 0.03 | 0.17 | 0.35 | 0.20 | 0.28 | 0.34 |

As shown by the above results, according to Examples 1 to 4 in accordance with the present invention, when the adhesive film was attached after applying the adhesion-reducing agent composition for adhesive film work, adhesion with a peel strength that allows relatively easy peeling was possible.

In contrast, in Comparative examples 1 to 4, which are not in accordance with the present invention, the film workability is insufficient, and even if the adhesion film was attached immediately after applying the adhesion-reducing agent composition for adhesive film work, adhesion with a peel strength that makes peeling difficult was made in some cases.

As shown in Table 2 below, 250 ml samples of the adhesion-reducing agent composition for adhesive film work of Example 2 and a commercially available product (gel for protection film (Design Lab)) were placed in a glass container and stored in a thermostatic chamber at various temperatures for various periods of time. The viscosity of the removed sample was measured by the same method as above.

**[Table 2]**

| | | Example 2 | | | | | | | | Commercially available product | | | |
|---|---|---|---|---|---|---|---|---|---|---|---|---|---|
| Temperature when left to stand | | -20°C | 0°C | 25°C | 50°C | 65°C | 70°C | 80°C | 90°C | -20°C | 70°C | 80°C | 90°C |
| | Initial stage | 2,450 | 2,450 | 2,450 | 2,450 | 2,450 | 2,450 | 2,450 | 2,450 | 3.150 | 3.150 | 3.150 | 3.150 |
| | Left for 1 day | 2,500 | - | - | - | - | - | - | - | 3.100 | - | - | - |
| | Left for 3 days | 2,550 | - | - | - | - | - | - | - | 2,850 | - | - | - |
| | Left for 5 days | 2,750 | - | - | - | - | - | - | - | 2,800 | - | - | - |
| Viscosity (mPa · s) | Left for 7 days | 2,900 | 2,650 | 2,650 | 2,600 | 2,650 | 2,800 | 2,850 | 2,950 | 2,750 | 2,350 | 1,600 | 600 |
| | Left for 14 days | 3,400 | 2,650 | 2,650 | 2,700 | 2,800 | 2,650 | 2,550 | 2,400 | 2,150 | 1,600 | 400 | less than 100 |
| | Left for 21 days | 3,550 | 2,600 | 2,550 | 2,650 | - | 2,800 | 2,700 | 2,300 | 850 | 600 | less than 100 | - |
| | Left for 28 days | - | 2,750 | 2,750 | 2,650 | - | 2,750 | 2,400 | 2,250 | - | - | - | - |

According to the results in Table 2, even when the temperature at which the mixture was left to stand was, for example, from -20 to 90°C, the change in viscosity was small even over a period of at least four weeks, and the mixture had a stable composition. This demonstrates that the adhesion-reducing agent composition for adhesive film work of the present invention has excellent storage stability.

## Claims

1. An adhesion-reducing agent composition for adhesive film work, comprising 0.10% by weight or more of one or more selected from aqueous (meth)acrylic resins, polysaccharides, and polyvinyl alcohol resins.

2. The adhesion-reducing agent composition for adhesive film work according to claim 1, wherein a viscosity at 20°C is 1,000 to 5,000 mPa·s.

3. The adhesion-reducing agent composition for adhesive film work according to claim 1 or 2, wherein a base material contains one or more selected from water, alcohols, glycols and glycol ethers.
